Europäisches Patentamt

European Patent Office

Office européen des brevets

(19)

(11) Veröffentlichungsnummer: **0 307 749 B1**

# (12) EUROPÄISCHE PATENTSCHRIFT

(45) Veröffentlichungstag der Patentschrift: **19.11.92**

(21) Anmeldenummer: **88114468.7**

(22) Anmeldetag: **05.09.88**

(51) Int. Cl.⁵: **H04B 10/00**, G08C 23/00,
E05B 49/00

(54) Verfahren zur optischen Datenübertragung zwischen zwei galvanisch getrennten Sende-Empfangs-Einheiten.

(30) Priorität: **14.09.87 DE 3730843**

(43) Veröffentlichungstag der Anmeldung:
**22.03.89 Patentblatt 89/12**

(45) Bekanntmachung des Hinweises auf die
Patenterteilung:
**19.11.92 Patentblatt 92/47**

(84) Benannte Vertragsstaaten:
**DE ES FR IT**

(56) Entgegenhaltungen:
**EP-A- 0 053 790**
**EP-A- 0 075 701**
**EP-A- 0 103 790**
**US-A- 4 091 734**

**PATENT ABSTRACTS OF JAPAN, Band 10,
Nr. 386 (E-467)[2443], 24. Dezember 1986 &
JP-A-61 176 220**

(73) Patentinhaber: **SIEMENS AKTIENGESELL-
SCHAFT**
**Wittelsbacherplatz 2**
**W-8000 München 2(DE)**

(72) Erfinder: **Dannhäuser, Friedrich, Dr.**
**Freischützstrasse 17**
**W-8000 München 81(DE)**

EP 0 307 749 B1

## Beschreibung

Die Erfindung betrifft ein Verfahren zur optischen Datenübertragung zwischen zwei galvanisch getrennten Sende-Empfangs-Einheiten, wobei die Sende-Empfangs-Einheiten die Merkmale aufweisen:

- jede der Sende-Empfangs-Einheiten hat mindestens einen Datensender und einen Datenempfänger;
- die erste Sende-Empfangs-Einheit hat zusätzlich einen Lichtsender zum Übertragen von Lichtenergie;
- die zweite Sende-Empfangs-Einheit hat zusätzlich einen Lichtempfänger zum Emfpangen der übertragenen Lichtenergie, Mittel zum Umsetzen der Lichtenergie in elektrische Energie und Mittel zum Speichern dieser elektrischen Energie.

Bei optischen bidirektionalen Datenübertragungseinrichtungen, wie z.B. bei elektronischen Schließsystemen, empfiehlt es sich, eine der beiden Sende-Empfangs-Einheiten (zweckmäßigerweise den Schlüssel) möglichst klein und wartungsfrei aufzubauen. Das Verwenden einer Batterie als interne Stromversorgung für die eine Sende-Empfangseinheit und das damit verbundene nötige Wechseln der entladenen Batterie als auch eine nötige Ladezustandskontrolle der Batterie, steht dieser Forderung entgegen.

Um von der Batterie völlig unabhängig zu sein, ist es deshalb günstig eine externe Stromversorgung der einen Sende-Empfangs-Einheit (zweckmäßigerweise das Schloß) vorzusehen. Diese externe Stromversorgung kann über Fotozellen durch Lichtübertragung erfolgen.

Eine derartige Anordnung ist z. B. aus der US-A-4 091 734 bekannt. Insbesondere FIG 3 dieser Schrift zeigt eine solche Anordnung zur Übertragung von Daten und Energie mittels Lichtübertragung.

Hierbei stellt sich das Problem, daß sowohl die Daten, als auch die Energie zur Stromversorgung der einen Sende-Empfangs-Einheit mit Licht übertragen werden. Bei dicht zusammenliegenden Datenempfänger und energieempfangendem Fotoelement kann die Dateninformation infolge Überstrahlung verfälscht werden, wodurch eine einwandfreie Datenübertragung nicht mehr gewährleistet ist.

Unserer Anmeldung liegt die Aufgabe zugrunde, ein Verfahren für eine optische Datenübertragungseinrichtung zu entwickeln, bei der die eine Sende-Empfangs-Einheit über Fotozellen mit elektrischer Energie versorgt wird, ohne daß die gesendeten Daten durch die Lichtenergieübertragung verfälscht werden.

Diese Aufgabe wird durch folgende hintereinander ablaufende Arbeitsschritte gelöst:

a) Die erste Sende-Empfangs-Einheit sendet für eine vorbestimmte Zeit Lichtenergie aus, die in der zweiten Sende-Empfangs-Einheit in elektrische Energie umgesetzt und zur Stromversorgung gespeichert wird;

b) der Datensender der ersten Sende-Emfpangs-Einheit beginnt innerhalb dieser vorbestimmten Zeit einen Hilfssynchronisierimpuls auszusenden;

c) die Aussendung der Lichtenrgie und des Hilfssynchronisierimpulses werden gleichzeitig abgeschaltet;

d) die beiden gleichzeitig auftretenden Abschaltflanken werden in der zweiten Sende-Empfangs-Einheit dedektiert und als Synchronisationssignal benutzt.

Weiterbildungen der Erfindung sind Gegenstand der Unteransprüche.

Die Erfindung wird im folgenden anhand von zwei Figuren näher erläutert. Es zeigen:

FIG 1    ein Ausführungsbeispiel für einen Signalverlauf nach unserem erfindungsgemäßen Verfahren zur Datenübertragung, und

FIG 2    ein weiteres Ausführungsbeispiel für eine Signalverlauf nach unserem erfindungsgmeäßen Verfahren zur Datenübertragung.

In den Figuren werden folgende Symbole verwendet:

$x_1$    Zeitverlauf der von der ersten zur zweiten Sende-Empfangs-Einheit gesendeten Lichtenergie,

$x_2$    Spannung am Ladekondensator der zweiten Sende-Emfpangs-Einheit,

$x_3$    von der ersten Sende-Empfangs-Einheit gesendetes Datensignal mit Hilfssynchronisierimpuls,

$x_4$    von der zweiten Sende-Emfpangs-Einheit gesendetes Datensignal,

$t_0$    Beginn der ersten Lichtsendung,

$t_1$    Ende der ersten Lichtsendung und Empfangsbereitschaft der zweiten Sende-Empfangs-Einheit,

$t_2$    Ende der Datenübertragung der ersten Sende-Empfangs-Einheit und Beginn der zweiten Lichtsendung,

$t_3$    Beginn des Hilfssynchronisierimpulses auf dem Datenkanal der ersten Sende-Empfangs-Einheit,

$t_4$    gleichzeitiges Enden der zweiten Lichtsendung und des Hilfssynchronisierimpulses und zugleich Beginn der Datenübertragung von der zweiten zur ersten Sende-Empfangs-Einheit,

$t_5$    Ende der Datenübertragung der zweiten Sende-Empfang-Einheit,

$t_6$    Beginn des Hilfssynchronisierimpul-

ses während dem Senden der ersten Lichtenergiesendung,

$T_1$       erste vorbestimmte Zeit,

$T_2$       zweite vorbestimmte Zeit,

a, b, c       Datenteilsendungen der ersten Sende-Empfangs-Einheit,

d, e, f       Datenteilsendungen der zweiten Sende-Empfangs-Einheit,

L, E       Lichtenergierimpulse.

Die zur Datenübertragung gemäß dem Verfahren unserer Erfindung nötige Datenübertragungseinrichtung weist zwei Sende-Empfangs-Einheiten auf, die jeweils mit einem optischen Datensender und einem optischen Datenempfänger versehen sind. Außerdem hat die erste Sende-Empfangs-Einheit einen Lichtsender zum Übertragen der Lichtenergie, die in der zweiten Sende-Empfangs-Einheit über einen Lichtempfänger, zweckmäßigerweise ein oder mehrere Fotoelemente, zu empfangen sind, der die übertragene Lichtenergie in elektrische Energie umsetzt. Zusätzlich weist die zweite Sende-Empfangs-Einheit Mittel zum Speichern dieser elektrischen Energie, z.B. einen Kondensator, auf. Auf diese Weise wird die zweite Sende-Empfangs-Einheit mit Strom versorgt. Die zweite Sende-Empfangs-Einheit enthält darüberhinaus Mittel zum Speichern und Verarbeiten der empfangenen Daten, die z.B. nach ihrer Verarbeitung über den Datensender wieder der ersten Sende-Empfangs-Einheit durch optische Übertragung mitgeteilt werden können.

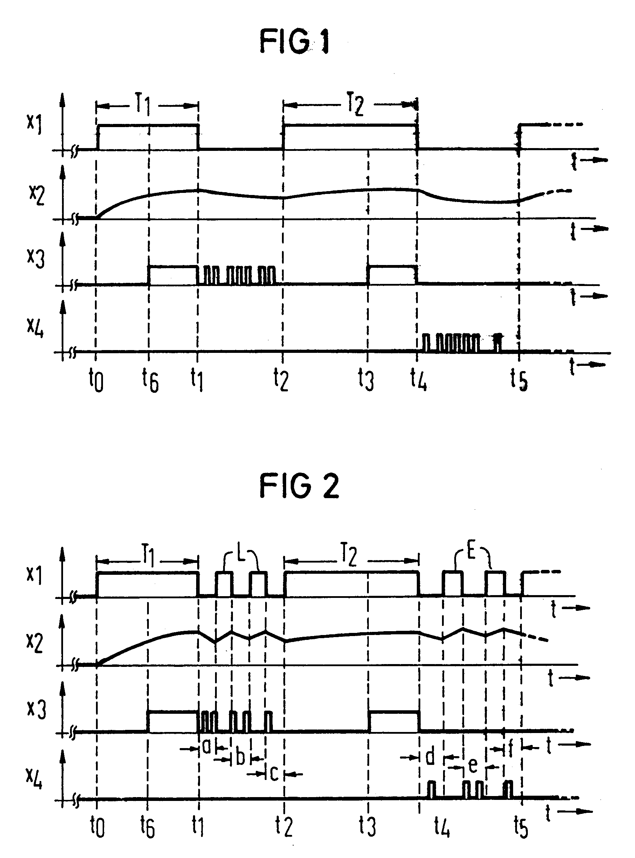

In FIG 1 ist das erfindungsgemäße Verfahren zur Datenübertragung anhand eines als Ausführungsbeispiel zu wertenden Signalablaufes dargestellt. In diesem Ausführungsbeispiel wird davon ausgegangen, daß zuerst die Energie liefernde erste Sende-Empfangs-Einheit ihre Daten zur zweiten mit Fotozellen versehenen zweiten Sende-Empfangs-Einheit sendet. Es ist aber genauso gut möglich, daß die Daten von der Energie empfangenden zweiten Sende-Empfangs-Einheit als erstes gesendet werden. Entscheiden bei der vorliegenden Erfindung ist, daß die Energie empfangende zweite Sende-Empfangs-Einheit ausreichend mit Lichtenergie versorgt wird, bevor sie die Daten empfängt oder sendet, so daß eine sichere Stromversorgung der zweiten Energie empfangenden Sende-Empfangs-Einheit gewährleistet ist.

Zur FIG 1 im einzelnen: In FIG 1 oben ist der zeitliche Verlauf $x_1$ der von der ersten zur zweiten Sende-Empfangs-Einheit gesendeten Lichtenergie dargestellt. Die Aussendung der Lichtenergie für die erste vorbestimmte Zeit $T_1$ beginnt zur Zeit $t_0$ und endet zur Zeit $t_1$. In der zweiten Sende-Empfangs-Einheit wird die empfangene Lichtenergie in elektrische Energie umgesetzt und zur Stromversorgung, z.B. in einem Kondensator, gespeichert. Nach $t_1$ sendet die erste Sende-Empfangs-Einheit - vgl. dazu Zeitverlauf $x_3$ - die zu sendenden Daten als Impulsfolge, die in der zweiten Sende-Empfangs-Einheit gespeichert oder bereits verarbeitet werden. Die Datenübertragung der ersten zur zweiten Sende-Empfangs-Einheit ist zum Zeitpunkt $t_2$ beendet. Während dieser Datenübertragung wird die zweite Sende-Empfangs-Einheit durch die im Kondensator gespeicherte Energie mit Strom versorgt. Im Zeitverlauf $x_2$ der FIG 1 ist die Spannung am Ladekondensator dargestellt. Nach der beschriebenen Datenübertragung sendet die erste Sende-Empfangs-Einheit Lichtenergie für eine zweite vorbestimmte Zeit $T_2$ bis zum Zeitpunkt $t_4$ aus, die wieder in der zweiten Sende-Empfangs-Einheit in elektrische Energie umgesetzt und gespeichert wird. Während dieser Zeit $T_2$ können in der zweiten Sende-Empfangs-Einheit die empfangenen Daten verarbeitet, z.B. mit in einem Festwertspeicher enthaltenen Daten verglichen, nach einem bestimmten Algorithmus berechnet oder chiffriert und die von der zweiten Sende-Empfangs-Einheit zu sendenden Daten ermittelt werden. Diese zweite vorbestimmte Zeit $T_2$ ist so gewählt, daß mit Sicherheit die Verarbeitungszeit und die von der zweiten Sende-Empfangs-Einheit zum Ermitteln der Daten nötige Zeit kleiner als $T_2$ ist. Während der Zeitdauer $T_2$ wird über den Datensender der ersten Sende-Empfangs-Einheit ein Hilfssynchronisierimpuls ausgesendet, z.B. zum Zeitpunkt $t_3$. Zum Zeitpunkt $t_4$ wird gleichzeitig die Lichtenergiesendung und das Datensignal abgeschaltet. Diese beiden gleichzeitig auftretenden Abschaltflanken kennzeichnen einen eindeutigen Zustand, der damit eindeutig auch bei eng zusammenliegendem Energieempfänger und optischen Datenempfänger wahrnehmbar ist. Mit den beiden abfallenden Flanken, d.h. daß sowohl der Energiesender als auch der Datensender der ersten Sende-Empfangs-Einheit sein Licht ausschaltet, wird der zweiten Sende-Empfangs-Einheit mitgeteilt, daß die erste Sende-Empfangs-Einheit empfangsbereit ist und die Datensendung der Energie empfangenden zweiten Sende-Empfangs-Einheit beginnen kann. Die erste und zweite Sende-Empfangs-Einheit sind damit synchronisiert. Die zweite Sende-Empfangs-Einheit beginnt ihre Daten zu senden - vgl. den Zeitverlauf $x_4$ in FIG 1. Ist diese Datensendung zum Zeitpunkt $t_5$ beendet, wird bei Bedarf erneut Lichtenergie ausgesendet und das Verfahren beginnt wieder bei $t_0$.

Diese Synchronisation kann auch für die Sendungen von der ersten zur zweiten Sende-Empfangs-Einheit benutzt werden, um die zweite Sende-Empfangs-Einheit zum richtigen Zeitpunkt in Empfangsbereitschaft zu bringen. Dazu sendet der Datensender bereits während der ersten vorbestimmten Zeit, z.B. bei $t_6$, also zwischen $t_0$ und $t_1$ Licht aus, das gleichzeitig mit dem Abschalten der Energiesendung abgeschaltet wird.

Es ist hier anzumerken, daß die erste vorbestimmte Zeit T$_1$ solange gewählt werden muß, daß eine sichere Stromversorgung für die zweite Sende-Empfangs-Einheit gewährleistet ist.

In FIG 2 ist ein weiteres Beispiel für den zeitlichen Ablauf der Energieübertragung und dem Datenaustausch zwischen zwei Sende-Empfangs-Einheiten nach unserem erfindungsgemäßen Verfahren dargestellt. Im Unterschied zum Verfahren nach FIG 1 ist jetzt die Datensendung von der ersten zur zweiten Sende-Empfangs-Einheit, also zwischen den Zeiten t1 und t2, in einzelne Datenteilsendungen a, b, c unterteilt, z.B. von je 1 Byte, die in der zweiten Sende-Empfangs-Einheit gespeichert werden können. In den Pausen zwischen den Datenteilsendungen erfolgt jetzt jedoch auch eine Energieübertragung in Form von einzelnen Lichtimpulsen L von der ersten zur zweiten Sende-Empfangs-Einheit, um so in den Pausen den Kondensator wieder aufladen zu können. Damit können auch längere Datensendungen von der ersten zur zweiten Sende-Empfangs-Einheit sicher übertragen werden, ohne daß die Stromversorgung in der zweiten Sende Empfangs-Einheit beeinträchtigt wird. Außerdem hat diese Weiterbildung der Erfindung den Vorteil, daß sowohl der hohe Stromverbrauch beim Auslesen aus dem in der zweiten Sende-Empfangs-Einheit enthaltenen individuellen Speicher (z.B. E$^2$ Prom 2506) gedeckt, als auch die nötige Mindestspannung nicht unterschritten wird. Mit der Unterteilung der Datensendungen in einzelne Bytes oder Bits wird zwar die Datenübertragungsgeschwindigkeit reduziert, aber eine sichere Stromversorgung mit guter Glättung der vom Kondensator gelieferten Spannung erzielt.

Um eine sichere Stromversorgung auch beim Senden der Daten von der zweiten Sende-Empfangs-Einheit zur ersten Sende-Empfangs-Einheit zu gewährleisten, kann auch diese Datensendung in einzelne Datenteilsendungen d, e, f unterteilt werden, während deren Pausen von der ersten zur zweiten Sende-Empfangs-Einheit Energieimpulse E übertragen werden. Dies ist in FIG 2 ab t$_4$ dargestellt.

Wie im Zusammenhang mit den FIG 1 und 2 gezeigt wurde, ist es mit unserem erfindungsgemäßen Verfahren möglich, bei einer optischen bidirektionalen Datenübertragungseinrichtung eine der beiden Sende-Empfangs-Einheiten netz- und batterieunabhängig "von außen" durch gezielte Lichtbestrahlung der Fotoelemente mit Energie zu versorgen und trotzdem eine sichere Datenübertragung zu erzielen. Das Überstrahlen der Datenimpulse durch die zur Stromversorgung nötige Energieübertragungen mit Licht wird dadurch vermieden, daß eine zeitliche Trennung zwischen Datensendung und Energiesendung erfolgt. Da neben dem einzigen Datenübertragungskanal keine weitere Nachrichtenkanäle zur Verfügung stehen, wird eine Synchronisation zwischen beiden Sende-Empfangs-Einheiten in der Weise erreicht, daß während der Energieübertragung auf dem Datenübertragungskanal ein Hilfssynchronisierimpuls gesendet wird, der gleichzeitig mit dem Energieimpuls abgeschaltet wird. Nach diesem gleichzeitigen Abschalten ist kein störendes Fremdlicht vorhanden und damit ein eindeutiger Zustand erreicht, der eine sichere Synchronisation zwischen erster und zweiter Sende-Empfangs-Einheit erlaubt.

Zum Übertragen der Lichtenergie und der Datenimpulse wird vorzugsweise infrarotes Licht verwendet.

Unser erfindungsgemäßes Verfahren kann vorteilhaft für elektronische Schließanlagen verwendet werden. Die Datenübertragungseinrichtung besteht dabei aus einem elektronischen Schloß mit dazugehörigem elektronischen Schlüssel, die die beiden Sende-Empfangs-Einheiten darstellen. Der elektronische Schlüssel trägt seitlich an seinem Bart Infrarot-Dioden und Infrarot-Fotoelemente. Der Schlüssel wird wie bei konventionellen Schließanlagen in das Schloß eingeführt, indem sich die Gegendioden befinden. Nach Überprüfung des Dialogs über Infrarot-Telegramme zwischen Schloß und Schlüssel öffnet das Schloß. Die Stromversorgung des elektronischen Schlüssels wird mit Fotoelementen nach dem im Zusammenhang mit den FIG 1 bis 3 ausführlich dargelegten Verfahren durchgeführt.

**Patentansprüche**

1. Verfahren zur optischen Datenübertragung zwischen zwei galvanisch getrennten Sende-Empfangs-Einheiten, wobei die Sende-Empfangs-Einheiten die Merkmale aufweisen:
   jede der Sende-Empfangs-Einheiten hat mindestens einen Datensender und einen Datenempfänger;
   die erste Sende-Empfangs-Einheit hat zusätzlich einen Lichtsender zum Übertragen von Lichtenergie;
   die zweite Sende-Empfangs-Einheit hat zusätzlich einen Lichtempfänger zum Empfangen der übertragenen Lichtenergie, Mittel zum Umsetzen der Lichtenergie in elektrische Energie und Mittel zum Speichern dieser elektrischen Energie,
   **gekennzeichnet durch** die aufeinanderfolgenden Schritte:
   a) die erste Sende-Empfangs-Einheit sendet für eine vorbestimmte Zeit (T$_1$, T$_2$, L, E) Lichtenergie aus, die in der zweiten Sende-Empfangs-Einheit in elektrische Energie umgesetzt und zur Stromversorgung gespeichert wird;

b) der Datensender der ersten Sende-Empfangs-Einheit beginnt innerhalb dieser vorbestimmten Zeit einen Hilfssynchronisierimpuls auszusenden;

c) die Aussendung der Lichtenergie und des Hilfssynchronisierimpulses werden gleichzeitig abgeschaltet;

d) die beiden gleichzeitig auftretenden Abschaltflanken werden in der zweiten Sende-Empfangs-Einheit delektiert und als Synchronisationssignal benutzt.

2. Verfahren nach Anspruch 1, **dadurch gekennzeichnet,** daß das Synchronisationssignal dazu dient, die zweite Sende-Empfangs-Einheit in Sendebereitschaft zu bringen und daß anschließend die Datensendung der zweiten Sende-Empfangs-Einheit ausgesendet wird.

3. Verfahren nach Anspruch 1, **dadurch gekennzeichnet,** daß das Synchronisationssignal dazu dient, die zweite Sende-Empfangs-Einheit in Empfangsbereitschaft zu bringen und daß anschließend die Datensendung der ersten Sende-Empfangs-Einheit ausgesendet wird.

4. Verfahren nach einem der Ansprüche 1 bis 3, **dadurch gekennzeichnet,** daß die Datensendung der ersten und/oder zweiten Sende-Empfangs-Einheit in Datenteilsendungen unterteilt wird, daß die Datenteilsendungen in den entsprechenden Sende-Empfangs-Einheiten gespeichert werden, daß jeweils zwischen diesen Datenteilsendungen Lichtenergie von der ersten Sende-Empfangs-Einheit zur zweiten Empfangs-Einheit gesendet wird, und daß diese Lichtenergie in der zweiten Sende-Empfangs-Einheit in elektrische Energie umgesetzt und zur Stromversorgung gespeichert wird, und daß nach der Aussendung der jeweils letzten Datenteilsendung wieder Lichtenergie für die vorbestimmte Zeit gesendet wird.

5. Verfahren nach einem der Ansprüche 1 bis 4, **dadurch gekennzeichnet,** daß zur Datenübertragung infrarotes Licht verwendet wird.

**Claims**

1. Method for optical data transmission between two galvanically separated emission and reception units, in which the emission and reception units exhibit the features:

each one of the emission and reception units has at least one data emitter and one data receiver;

the first emission and reception unit has, additionally, a light emitter for the transmission of light energy;

the second emission and reception unit has, additionally, a light receiver to receive the transmitted light energy, means for the conversion of the light energy into electrical energy and means for storing this electrical energy, characterised by the successive steps:

a) the first emission and reception unit emits, for a predetermined time ($T_1$, $T_2$, L, E), light energy which in the second emission and reception unit is converted into electrical energy and is stored for power supply;

b) the data emitter of the first emission and reception unit begins, within this predetermined time, to emit an auxiliary synchronisation pulse;

c) the emission of the light energy and that of the auxiliary synchronisation pulse are simultaneously shut off;

d) the two simultaneously occurring shut-off edges are detected in the second emission and reception unit and are used as synchronisation signal.

2. Method according to Claim 1, characterised in that the synchronisation signal serves to bring the second emission and reception unit into a condition of emission readiness, and in that subsequently the data are emitted from the second emission and reception unit.

3. Method according to Claim 1, characterised in that the synchronisation signal serves to bring the second emission and reception unit into a condition of reception readiness, and in that subsequently the data are emitted by the first emission and reception unit.

4. Method according to one of Claims 1 to 3, characterised in that the data emission of the first and/or second emission and reception unit is subdivided into data subemissions, in that the data subemissions are stored in the corresponding emission and reception units, in that light energy is in each case sent from the first emission and reception unit to the second reception unit between these data subemissions, and in that this light energy is, in the second emission and reception unit, converted into electrical energy and is stored for power supply, and in that light energy is again sent for the predetermined time after the emission of the respectively last data subemission.

5. Method according to one of Claims 1 to 4, characterised in that infrared light is used for the data transmission.

## Revendications

1. Procédé de transmission optique de données entre deux unités d'émission-réception séparées galvaniquement, les unités d'émission-réception présentant les caractéristiques suivantes:

   chacune des unités d'émission-réception possède au moins un émetteur de données et un récepteur de données;

   la première unité d'émission-réception possède en supplément un émetteur de lumière pour la transmission d'une énergie lumineuse;

   la seconde unité d'émission-réception possède en outre un récepteur de lumière pour la réception de l'énergie lumineuse transmises, des moyens pour convertir l'énergie lumineuse en une énergie électrique et des moyens pour mémoriser cette énergie électrique,

   caractérisé par les étapes successives :

   a) la première unité d'émission-réception émet, pendant un intervalle de temps prédéterminé ($T_1$, $T_2$, L, E), une énergie lumineuse qui est convertie en une énergie électrique dans la seconde unité d'émission-réception et est stockée pour l'alimentation en courant;

   b) l'émetteur de données de la première unité d'émission-réception commence à émettre une impulsion de synchronisation auxiliaire pendant un intervalle de temps prédéterminé;

   c) l'émission de l'énergie lumineuse et de l'impulsion de synchronisation auxiliaire sont interrompues simultanément;

   d) les deux flancs d'interruption, qui apparaissent simultanément, sont détectés dans la seconde unité d'émission-réception et sont utilisés en tant que signal de synchronisation.

2. Procédé suivant la revendication 1, caractérisé par le fait que le signal de synchronisation est utilisé pour amener la seconde unité d'émission-réception dans l'état prêt à l'émission et qu'ensuite, l'émission de données de la seconde unité d'émission-réception est exécutée.

3. Procédé suivant la revendication 1, caractérisé par le fait que le signal de synchronisation sert à amener la seconde unité d'émission-réception dans l'état prêt à la réception et qu'ensuite, l'émission de données de la première unité d'émission-réception est exécutée.

4. Procédé suivant l'une des revendications 1 à 3, caractérisé par le fait que l'émission de données par la première et/ou la seconde unité d'émission-réception est subdivisée en émissions partielles de données, que les émissions partielles de données sont numérisées dans les unités d'émission-réception correspondantes, que l'énergie lumineuse est envoyée par la première unité d'émission-réception à la seconde unité d'émission-réception, respectivement entre ces émissions partielles de données, et que cette énergie lumineuse est convertie en une énergie électrique dans la seconde unité d'émission-réception et est mémorisée pour l'alimentation en courant et qu'après exécution de la dernière émission partielle respective de données, une énergie lumineuse est à nouveau émise pendant un intervalle de temps prédéterminé.

5. Procédé suivant l'une des revendications 1 à 4, caractérisé par le fait qu'on utilise une lumière infrarouge pour la transmission des données.

# FIG 1

# FIG 2